# EUROPÄISCHE PATENTSCHRIFT

(11) **EP 3 065 974 B1**
(45) Veröffentlichungstag und Bekanntmachung des Hinweises auf die Patenterteilung: **23.05.2018**
(21) Anmeldenummer: 14790514.5
(22) Anmeldetag: 25.10.2014
(51) Int. Cl.: B60Q 3/20

(54) **FAHRZEUG MIT BELEUCHTUNGSVORRICHTUNG MIT EINER LÄNGSFÖRMIGEN BELEUCHTUNGSEINRICHTUNG**
VEHICLE HAVING A LIGHTING DEVICE WITH AN ELONGATE LIGHTING UNIT
VÉHICULE ÉQUIPÉ D'UNE INSTALLATION D'ÉCLAIRAGE COMPORTANT UN APPAREIL D'ÉCLAIRAGE DE FORME ALLONGÉE

(30) Priorität: 08.11.2013 DE 102013018784
(43) Veröffentlichungstag der Anmeldung: 14.09.2016
(73) Patentinhaber: Audi AG, 85045 Ingolstadt (DE)
(72) Erfinder: REUSCHEL, Jens Dietmar, 85053 Ingolstadt (DE); TOVAR, Johannes, 85049 Ingolstadt (DE)
(74) Vertreter: Thielmann, Frank
(86) Internationale Anmeldenummer: PCT/EP2014/002882
(87) Internationale Veröffentlichungsnummer: WO 2015/067353

(56) Entgegenhaltungen:
- EP-A1- 1 564 567
- DE-A1-102006 009 636
- DE-A1-102008 064 022
- DE-A1-102011 121 392
- US-A1- 2009 066 255

## Beschreibung

Die vorliegende Erfindung betrifft ein Fahrzeug mit wenigstens einer Beleuchtungsvorrichtung mit wenigstens einer längsförmigen Beleuchtungseinrichtung.

Aus dem Stand der Technik sind Beleuchtungsvorrichtungen (Lichtelemente) bekannt, die im Interieur eines Fahrzeuges verbaut sind, als auch Beleuchtungsvorrichtungen (Lichtelemente), die das äußere eines Fahrzeuges illuminieren. Die Beleuchtungsvorrichtungen können bspw. einen längsförmigen Lichtleiter umfassen, in die Licht einkoppelbar ist.

So beschreibt die DE 10 2009 039 556 A1 ein Beleuchtungssystem, insbesondere für den Innenraum eines Fahrzeugs, umfassend zumindest einen seitlich emittierenden Lichtleiter, welcher ein Faserbündel seitenemittierender Fasern umfasst, wobei das Faserbündel in einer rundum umschlossenen transparenten Kunststoffummantelung angeordnet ist, in welcher die seitenemittierenden Fasern zumindest in axialer Richtung gegeneinander beweglich sind. Das Beleuchtungssystem soll insbesondere geeignet sein für Türpaneele, Cockpitmodule, Konsolen, Sitze oder den Dachhimmel eines Fahrzeugs.

Aus der DE 10 2009 042 112 A1 ist eine Zierleiste für ein Kraftfahrzeug bekannt mit einem ersten Teilprofil und einem mit diesem gefügten zweiten Teilprofil, die einen Aufnahmeraum für eine innere Einheit umschließen, der eine Öffnung nach außen aufweist. Bei der Zierleiste kann die innere Einheit eine Leuchteinheit, bspw. einen längsförmigen Lichtleiter, der durch mindestens eine LED gespeist wird und/oder der mit einer Elektrolumineszenzfolie bestückt ist, umfassen. Die Zierleiste soll insbesondere als eine Außenzierleiste geeignet sein.

Die EP 2 565 687 A1 hat eine Beleuchtungsvorrichtung zum Erzeugen eines Leuchtstreifens entlang einer vorgegebenen Strecke an einem Bauteil zum

Gegenstand, umfassend einen länglich geformten Lichtleiter zum Verteilen von Licht entlang der Strecke, ein mit dem Lichtleiter verbundenes Einkoppelelement zum Erzeugen des Lichts und zum Einkoppeln desselben in den Lichtleiter, eine Festlagereinrichtung, mittels welcher ein Bereich des Lichtleiters bezüglich des Bauteils ortsfest gelagert ist, und eine Loslagereinrichtung, mittels welcher das Einkoppelelement bezüglich des Bauteils entlang zumindest einer Richtung bewegbar gelagert ist.

Die EP 2 565 688 A1 beschreibt ebenfalls eine Beleuchtungsvorrichtung zum Erzeugen eines Leuchtstreifens entlang einer vorgegebenen Strecke, wobei Licht einer ersten Lichtquelle entlang eines ersten Abschnitts der Strecke mittels eines ersten Lichtleiters bis zu einem Endbereich desselben und Licht einer zweiten Lichtquelle entlang eines zweiten Abschnitts der Strecke mittels eines zweiten Lichtleiters bis zu einem Endbereich desselben verteilbar ist und hierbei die beiden Endbereiche entlang der Strecke nebeneinander angeordnet sind.

Die Beleuchtungsvorrichtungen gemäß den beiden letztgenannten Druckschriften können bspw. um eine verschließbare Öffnung eines Kraftwagens oder in einer Fassung für ein Schiebedach vorgesehen sein.

Aus der EP 1 564 567 A1 ist ein Beleuchtungssystem für Fahrzeuge bekannt, das eine im Inneren des Fahrzeugs angeordnete Lichtquelle und eine Lichtleitfaser aufweist. Diese Lichtleitfaser hat zwei Enden und Licht von der Lichtquelle wird an einem Ende eingekoppelt und am anderen Ende ausgekoppelt, um einen vorgegebenen Bereich zu beleuchten. Aufgrund der Lichtleitfaser kann die Lichtquelle getrennt von dem zu beleuchteten Bereich angeordnet sein.

Und die DE 103 23 320 A1 beschreibt eine Anzeigevorrichtung für ein Kraftfahrzeug zum Anzeigen von das Kraftfahrzeug betreffenden Informationen oder zum Darstellen eines graphischen Elementes. Das Kraftfahrzeug weist eine Verglasung auf, die von Licht durchleuchtbar ist, wobei auf und/oder in der Verglasung eine elektrolumineszierende Schicht zum Anzeigen der das Kraftfahrzeug betreffenden Informationen oder zum Darstellen des graphischen Elementes angeordnet ist. Die elektrolumineszierende Schicht kann bspw. als längsförmiges Bremslicht ausgebildet sein.

Es ist Aufgabe der vorliegenden Erfindung, eine Fahrzeug, insbesondere ein Kraftfahrzeug, mit wenigstens einer Beleuchtungsvorrichtung zur Verfügung zu stellen, mit der bisher nicht erzielbare Vorteile erreicht werden können.

Diese Aufgabe wird gelöst mit dem Fahrzeug gemäß Anspruch 1. Vorteilhafte Weiterbildungen der Erfindung sind Gegenstand der Unteransprüche.

Erfindungsgemäß wird ein Fahrzeug, insbesondere Kraftfahrzeug, mit wenigstens einer Beleuchtungsvorrichtung mit einer längsförmigen Beleuchtungseinrichtung zum Erzeugen eines Leuchtstreifens entlang einer vorgegebenen Strecke der Beleuchtungseinrichtung vorgeschlagen. Bei dem Fahrzeug ist ein erster Abschnitt der Beleuchtungseinrichtung am Interieur des Fahrzeugs und ein zweiter Abschnitt der Beleuchtungseinrichtung an der Außenseite des Fahrzeugs angeordnet, ist die Beleuchtungsvorrichtung dazu eingerichtet, einen gleichartigen Leuchtstreifen entlang einer Strecke des ersten sowie des zweiten Abschnitts der Beleuchtungseinrichtung zu erzeugen, und wird das Licht des von dem ersten Abschnitt der Beleuchtungseinrichtung erzeugten Leuchtstreifens derart abgestrahlt, dass es für einen, sich an einer vorgebbaren Position des Innenraums des Fahrzeugs befindlichen Insassen sichtbar ist, und wird das Licht des von dem zweiten Abschnitt der Beleuchtungseinrichtung erzeugten Leuchtstreifens derart abgestrahlt, dass er von einer vorgebbaren Position relativ zu dem und außerhalb des Fahrzeugs sichtbar ist.

Das Fahrzeug ist dadurch gekennzeichnet, dass der erste Abschnitt und der zweite Abschnitt der Beleuchtungseinrichtung als ein gemeinsamer, einstückiger Lichtleitkörper ausgebildet sind, in den Licht einkoppelbar ist und der sich durch wenigstens eine Bauteiltrennung, die den Innen- und den Außenraum des Fahrzeugs voneinander trennt, hinweg erstreckt.

Durch die vorliegende Erfindung ist ein Fahrzeug mit einem Leuchtstreifen verfügbar, der in gleichartiger Weise sowohl im Interieur des Fahrzeugs leuchtet, als auch an der Außenseite des Fahrzeugs. Dieser Leuchtstreifen ist gleichzeitig sowohl für Insassen eines Fahrzeugs als auch von außerhalb des Fahrzeugs sichtbar. Hierdurch kann ein gegebenenfalls stufenloser und unterbrechungsfreier Übergang zwischen dem Innen- und dem Außenraum eines Fahrzeugs erzeugt werden.

Erfindungsgemäß kann der gleichartige Leuchtstreifen, der durch den ersten und zweiten Abschnitt der Beleuchtungseinrichtung erzeugt wird, sowohl in ästhetischer als auch informativer Hinsicht Verwendung finden, wobei beide Verwendungszwecke auch gleichzeitig realisiert sein können.

Gemäß einer ersten vorteilhaften Weiterbildung der Erfindung ist vorgesehen, dass der Leuchtstreifen eine vorgebbare Lichtfarbe, einen vorgebbaren Wechsel der Lichtfarbe, eine vorgebbare Lichtintensität (Lichtstärke), eine vorgebbare Änderung der Lichtintensität und/oder eine vorgebbare Leuchtdauer aufweist.

Gemäß einer zweiten vorteilhaften Weiterbildung der Erfindung weist die Beleuchtungsvorrichtung weiter eine Bedieneinrichtung für einen Benutzer auf, mittels der die Beleuchtungseinrichtung eingeschaltet oder ausgeschaltet, und/oder die Lichtfarbe, der Wechsel der Lichtfarbe, die Lichtintensität, die Änderung der Lichtintensität und/oder die Leuchtdauer eingestellt werden kann. Hierdurch kann ein Benutzer beispielsweise gezielt die Beleuchtungseinrichtung ein- oder ausschalten, oder die Art und Weise des erzeugten Leuchtstreifens einstellen.

Gemäß einer weiteren vorteilhaften Weiterbildung der Erfindung weist die Beleuchtungsvorrichtung weiter ein Steuergerät auf, mittels dem in Abhängigkeit von vorgebbaren Gegebenheiten die Beleuchtungseinrichtung eingeschaltet oder ausgeschaltet, und/oder die Lichtfarbe, der Wechsel der Lichtfarbe, die Lichtintensität, die Änderung der Lichtintensität und/oder die Leuchtdauer gesteuert werden kann. Hierdurch kann beispielsweise der Leuchtstreifen in vorteilhafter Weise zu Informationszwecken sowohl für die Insassen eines Fahrzeugs wie auch für Personen und/oder Einrichtungen außerhalb des Fahrzeugs verwendet werden.

Hierbei ist es von Vorteil, wenn das Steuergerät dazu eingerichtet ist, die Beleuchtungsvorrichtung in Abhängigkeit von einer erkannten Fehlfunktion des Fahrzeugs, eines erkannten fahruntüchtigen oder eingeschränkt fahrtüchtigen Zustands des Fahrers, eines Zustands pilotierten Fahrens und/oder einer vorgebbaren erkannten Verkehrssituation zu steuern.

Als Leuchtmittel, mit dem Licht in den wenigstens einen längsförmigen Lichtleiter der Beleuchtungseinrichtung eingekoppelt werden kann, können eine oder mehrere Lichtemittierende Dioden vorgesehen sein.

Gemäß einer weiteren, von der vorliegenden Erfindung nicht umfassten Ausgestaltung kann der erste Abschnitt und der zweite Abschnitt der Beleuchtungseinrichtung jeweils einen längsförmigen Lichtleiter umfassen und ist/sind wenigstens eine Lichteinkoppelstelle bei dem Lichtleiter des ersten Abschnitts und/oder bei dem Lichtleiter des zweiten Abschnitts der Beleuchtungseinrichtung vorgesehen.

Hierbei kann, gemäß einer von der vorliegenden Erfindung nicht umfassten Ausgestaltung, vorgesehen sein, dass der zweite Abschnitt der Beleuchtungseinrichtung ortsfest in oder an einem Bauteil des Fahrzeugs angeordnet ist, wobei das Bauteil relativ zu dem ersten Abschnitt der Beleuchtungseinrichtung von einer ersten zu einer zweiten Position beweglich ist, und wobei in den Lichtleiter des ersten und/oder zweiten Abschnitts eingekoppeltes Licht in den Lichtleiter des jeweils anderen Abschnitts einleitbar ist, wenn sich das Bauteil in der ersten Position befindet.

Bei dem Bauteil des Fahrzeugs kann es sich beispielsweise um eine Fahrzeugtür, eine Motorhaube, ein Außenspiegel, eine Heckklappe und/oder ein Kofferraumdeckel handeln.

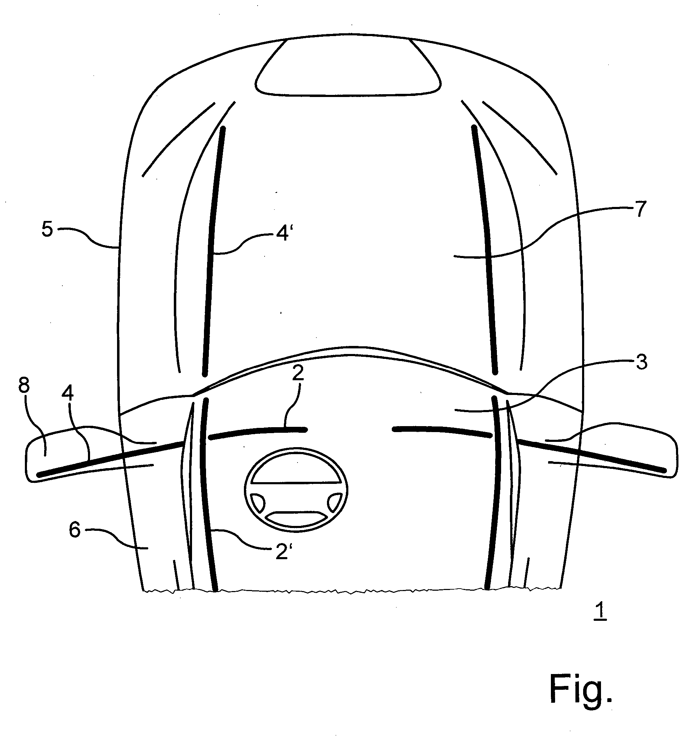

Die vorliegende Erfindung wird anhand der beigefügten Zeichnung näher erläutert.

Die Figur zeigt schematisch eine Teilschnittansicht eines erfindungsgemäßen Fahrzeugs.

Die Darstellungen in der Figur sind rein schematisch und nicht maßstabsgerecht. Innerhalb der Figur sind gleiche oder ähnliche Elemente mit gleichen Bezugszeichen versehen.

Die nachfolgend erläuterten Ausführungsbeispiele stellen bevorzugte Ausführungsformen der vorliegenden Erfindung dar. Die vorliegende Erfindung ist selbstverständlich nicht auf diese Ausführungsformen beschränkt.

Wie in der Figur rein schematisch dargestellt ist, weist das erfindungsgemäße Fahrzeug 1, bei dem es sich insbesondere um ein Kraftfahrzeug handeln kann, wenigstens eine Beleuchtungsvorrichtung mit einer längsförmigen Beleuchtungseinrichtung zum Erzeugen eines Leuchtstreifens entlang einer vorgegebenen Strecke der Beleuchtungseinrichtung auf.

Bei dem Fahrzeug 1 ist ein erster Abschnitt 2, 2' der Beleuchtungseinrichtung am Interieur 3 des Fahrzeugs 1 und ein zweiter Abschnitt 4, 4' der Beleuchtungseinrichtung an der Außenseite 5 des Fahrzeugs 1 angeordnet. Die Beleuchtungsvorrichtung ist dazu eingerichtet, einen gleichartigen Leuchtstreifen entlang einer Strecke des ersten 2, 2' sowie des zweiten Abschnitts 4, 4' der Beleuchtungseinrichtung zu erzeugen. Das Licht des von dem ersten Abschnitt 2, 2' der Beleuchtungseinrichtung erzeugten Leuchtstreifens wird von der Beleuchtungseinrichtung dabei derart abgestrahlt, dass es für einen, sich an einer vorgebbaren Position des Innenraums des Fahrzeugs 1 befindlichen Insassen sichtbar ist, und das Licht des von dem zweiten Abschnitt 4, 4' der Beleuchtungseinrichtung erzeugten Leuchtstreifens wird derart abgestrahlt, dass er von einer vorgebbaren Position relativ zu dem und außerhalb des Fahrzeugs 1 sichtbar ist.

In der Figur sind auf der linken und rechten Seite des Fahrzeugs 1 Beleuchtungseinrichtungen dargestellt (wobei bezüglich der auf der rechten Seite der Figur dargestellten Beleuchtungseinrichtungen aus Gründen der Übersichtlichkeit auf die Hinzufügung der entsprechenden Bezugszeichen verzichtet wurde). Das erfindungsgemäße Fahrzeug kann selbstverständlich eine oder mehrere Beleuchtungseinrichtungen mit ersten 2, 2' und zweiten Abschnitten 4, 4' aufweisen, wobei die Beleuchtungseinrichtung(en) symmetrisch oder asymmetrisch zueinander und/oder in Bezug auf die Geometrie des Fahrzeugs 1 angeordnet sein können.

Erfindungsgemäß umfasst die Beleuchtungseinrichtung wenigstens einen längsförmigen Lichtleiter, in den Licht einkoppelbar ist. Dem Fachmann sind verschiedenartigste längsförmige Lichtleiter aus dem Stand der Technik bekannt, beispielsweise in Form von einer oder mehreren Glasfasern, gläsernen Lichtleitern, Kunststofffasern, Kunststoff-Lichtleitern, in oder an denen Störstellen vorhanden sind, an denen Licht, das durch das Innere des Lichtleiters geleitet wird, derart gebeugt oder gebrochen wird, dass es aus dem Lichtleiter seitlich austritt. Für die vorliegende Erfindung sind grundsätzlich alle längsförmigen Lichtleiter verwendbar, die derzeit bereits bekannt sind oder zukünftig bekannt werden.

Auch die Art und Weise, wie Licht für den Leuchtstreifen erzeugt wird, unterliegt keiner Beschränkung und daher kann jede geeignete Art und Weise der Lichterzeugung für die vorliegende Erfindung verwendet werden, bspw.

Glühlampen, Gasentladungslampen, Leuchtstofflampen, Elektrolumineszenzeinrichtungen, etc. Gemäß einer bevorzugten Ausführungsform der Erfindung ist/sind als Leuchtmittel, mit dem Licht in den wenigstens einen längsförmigen Lichtleiter der Beleuchtungseinrichtung eingekoppelt werden kann, ein oder mehrere Lichtemittierende Dioden vorgesehen. Lichtemittierende Dioden weisen eine lange Lebensdauer und eine gute Energieeffizienz auf, es sind Lichtemittierende Dioden für praktisch alle Wellenlängenbereiche des sichtbaren Lichts bekannt, Lichtemittierende Dioden können in Arrays angeordnet sein (z.B. RGB-LEDs), etc., so dass Lichtemittierende Dioden gegenwärtig eine bevorzugte Lichtquelle darstellen.

Für die Einkopplung von Licht in den Lichtleiter bestehen ebenfalls keine Beschränkungen und es können alle geeigneten Positionen und Art und Weisen für die Einkopplung von Licht in den Lichtleiter verwendet werden. Um bei einem länglichen Lichtleiter eine gleichmäßige Abstrahlung von Licht zu erhalten, kann beispielsweise vorgesehen sein, dass entlang des Lichtleiters in vorgebbaren Abständen von beispielsweise 15 cm, 20 cm, 25 cm, 30 cm, 35 cm, 40 cm, 45 cm oder 50 cm jeweils eine Lichteinkoppelstelle vorgesehen ist, bei der bspw. Licht unter einem vorgebbaren Winkel in den Lichtleiter eingekoppelt wird. Auch besteht die Möglichkeit, Licht von den Enden eines längsförmigen Lichtleiters her in den Lichtleiter einzukoppeln.

Bei einem nur begrenzt zur Verfügung stehenden Bauraum oder wenn beispielsweise zwei längliche Lichtleiter mit ihren Enden aneinandergrenzen, kann es von Vorteil sein, wenn keine Lichteinkopplung von den Enden des/der Lichtleiter her erfolgt. Eine Einkopplung von Licht von den Enden des Lichtleiters her benötigt in der Regel einen sich in Längsrichtung des Lichtleiters erstreckenden, verlängerten Bauraum, der bspw. in einem Fahrzeug je nach Einbauort und/oder Länge des Lichtleiters nicht zur Verfügung stehen kann. Und wenn zwei Lichtleitereinrichtungen mit ihren Enden aneinandergrenzen sollen, würde eine Lichteinkopplung über das/die Ende(n) eines Lichtleiters gegebenenfalls eine sichtbare Unterbrechung des Leuchtbandes und somit eine Dunkelstelle zur Folge haben.

Da der/die durch die Beleuchtungsvorrichtung des erfindungsgemäßen Fahrzeugs 1 erzeugte Leuchtstreifen ästhetischen und/oder informativen Zwecken dienen kann, kann die Beleuchtungsvorrichtung dazu eingerichtet sein, einen Leuchtstreifen mit einer vorgebbaren Lichtfarbe, einem vorgebbaren Wechsel der Lichtfarbe, einer vorgebbare Lichtintensität, einer vorgebbare Änderung der Lichtintensität und/oder einer vorgebbaren Leuchtdauer zu erzeugen.

Wie oben bereits erwähnt, können beispielsweise mehrere Lichtemittierende Dioden vorgesehen sein, die jeweils Licht mit einer unterschiedlichen Wellenlänge erzeugen und wobei das Licht der mehreren Lichtemittierenden Dioden in einen Lichtleiter einkoppelbar ist. Auf diese Weise können durch individuelles Anschalten der jeweiligen Lichtemittierenden Dioden unterschiedliche Farben des Leuchtstreifens erzeugt werden, durch eine entsprechende Ansteuerung von verschiedenen Lichtemittierenden Dioden auch Mischfarben und Farbwechsel; ebenso sind durch eine entsprechende Ansteuerung (bspw. realisierbar durch eine entsprechende Programmierung eines Steuergeräts) auch beliebige Abfolgen eines Wechsels/Änderung der Lichtfarbe, der Lichtintensität (Lichtstärke) und/oder der Leuchtdauer, etc. möglich.

Zur Bedienung der Beleuchtungsvorrichtung kann gemäß einer vorteilhaften Weiterbildung der Erfindung die Beleuchtungsvorrichtung weiter eine (in der Figur nicht dargestellte) Bedieneinrichtung für einen Benutzer aufweisen, mittels der die Beleuchtungseinrichtung eingeschaltet oder ausgeschaltet, und/oder die Lichtfarbe, der Wechsel der Lichtfarbe, die Lichtintensität, die Änderung der Lichtintensität und/oder die Leuchtdauer, etc. eingestellt werden kann.

Die Art der Bedieneinrichtung unterliegt keinen besonderen Beschränkungen und es kann jede geeignete Art von Bedieneinrichtung vorgesehen sein. Beispielsweise kann für ein Ein- und Ausschalten der Beleuchtungseinrichtung ein Drucktaster, ein Hebel, eine berührungsempfindliche oder näherungsempfindliche Oberfläche (z.B. Touchpad, Bildschirm) und/oder eine Einrichtung mit einer Spracherkennung vorgesehen sein. In einem einfachen Fall kann daher bspw. mittels der Betätigung eines Drucktasters oder eines Hebels ein Leuchtstreifen mit einer vorgegebenen Lichtfarbe und Lichtintensität eingeschaltet werden und bei einer erneuten Betätigung des Drucktasters oder Hebels oder bei einem Loslassen des Drucktasters oder Hebels der Leuchtstreifen wieder ausgeschaltet werden.

Zum Einstellen der Art und Weise, wie von der Beleuchtungseinrichtung bei deren Einschalten einen Leuchtstreifen erzeugen soll, d.h. mit welcher Lichtfarbe, welchem (optionalem) Wechsel der Lichtfarbe, welcher Lichtintensität, welcher (optionalen) Änderung der Lichtintensität und/oder welcher Leuchtdauer, kann beispielsweise als ein Bestandteil der Bedieneinrichtung eine graphische Anzeige in Form eines Bildschirms vorgesehen sein, auf dem mittels eines geeigneten Computerprogramms die Einstellmöglichkeiten und vorgenommenen/aktuellen Einstellungen angezeigt werden können.

Zum Einstellen der Beleuchtungseinrichtung können alle geeigneten Mensch-Maschine-Schnittstellen vorgesehen sein, bspw. indem der gerade erwähnte Bildschirm berührungs- und/oder näherungsempfindlich ausgeführt ist, dass ein Touchpad vorgesehen ist, dass eine Einstellung mittels eines Tastenfelds, eines Joy-Sticks, einer Sprachsteuerung, etc. vorgesehen ist.

Die mittels der Bedieneinrichtung vorgenommenen Einstellungen können in einer geeigneten (in der Figur nicht dargestellten) Speichereinrichtung gespeichert werden und dann bei einem Einschalten der Beleuchtungseinrichtung durch eine geeignete Steuereinheit der Leuchtstreifen in der voreingestellten Art und Weise erzeugt werden. Selbstverständlich können mehr als eine Art und Weise eines Leuchtstreifens eingestellt und abgespeichert werden und durch entsprechende Bedienhandlungen an der Bedieneinrichtung jeweils einer der abgespeicherten Leuchtstreifen erzeugt werden. Auf diese Weise lassen sich bspw. verschiedene individuelle Abläufe/Wechsel der Lichtfarbe, Lichtintensität, etc. des Leuchtstreifens erstellen, abspeichern, ein- und ausschalten.

Insbesondere wenn der Leuchtstreifen auch informativen Zwecken dienen soll, kann die Beleuchtungsvorrichtung weiter ein Steuergerät aufweisen, mittels dem in Abhängigkeit von vorgebbaren Gegebenheiten die Beleuchtungseinrichtung eingeschaltet oder ausgeschaltet, und/oder die Lichtfarbe, der Wechsel der Lichtfarbe, die Lichtintensität, die Änderung der Lichtintensität und/oder die Leuchtdauer gesteuert werden kann.

Beispielsweise kann durch das Steuergerät die Beleuchtungsvorrichtung in Abhängigkeit von einer erkannten Fehlfunktion des Fahrzeugs 1, eines erkannten fahruntüchtigen oder eingeschränkt fahrtüchtigen Zustands des Fahrers, eines Zustands pilotierten Fahrens und/oder einer vorgebbaren erkannten Verkehrssituation gesteuert werden.

Beispielsweise kann bei einem mittels einer geeigneten Sensoreinrichtung des Fahrzeugs 1 erkannten Fehlfunktion des Fahrzeugs 1 (bspw. Motordefekt, Reifendefekt, Ausgehen des/der Betriebsmittel), bei dem ein Anhalten des Fahrzeugs 1 erforderlich ist, durch die Steuereinrichtung die Beleuchtungseinrichtung derart angesteuert werden, dass ein für die gegebene Situation vorgegebene Art des Leuchtstreifen erzeugt und abgestrahlt wird. Dadurch, dass der Leuchtstreifen gleichartig sowohl von dem ersten Abschnitt 2, 2' der Beleuchtungseinrichtung erzeugt wird, als auch von dem zweiten Abschnitt 4, 4' der Beleuchtungseinrichtung, werden sowohl die Insassen des Fahrzeugs 1 (bspw. der Fahrer) als auch Personen und/oder Einrichtungen außerhalb des Fahrzeugs 1 von dem aufgrund des Störungszustands des Fahrzeugs 1 erforderlichen Anhaltens des Fahrzeugs 1 auf die gleiche Weise informiert.

Aus dem Stand der Technik sind Vorrichtungen und Verfahren bekannt, mit denen ein fahruntüchtiger (bspw. Ohnmacht, Herz-/Kreislaufprobleme) oder eingeschränkt fahrtüchtiger (z.B. Müdigkeit, Unkonzentriertheit) Zustand eines Fahrers erkannt und entsprechende Maßnahmen bei dem Fahrzeug 1 eingeleitet werden können. Auch in einem solchen Fall können durch die vorliegende Erfindung sowohl die Insassen eines Fahrzeugs 1 als auch Personen und/oder Einrichtungen außerhalb des Fahrzeugs 1 von einem solchen Zustand des Fahrers und dem zu erwartenden weiteren Bewegungsablauf des Fahrzeugs 1 informiert werden.

Ein weiteres Beispiel für eine vorteilhafte Anwendung der vorliegenden Erfindung stellt der Zustand eines pilotierten Fahrens dar. Bei einem pilotierten Fahren übernehmen fahrzeugseitige Systeme die Fahraufgabe für einen vorgebbaren Zeitraum vom Fahrer und bewegt sich das Fahrzeug 1 vollautomatisch. Hierbei muss der Fahrer nach der derzeitigen Gesetzeslage jedoch jederzeit die Möglichkeit haben, die Fahraufgabe wieder zu übernehmen bzw. das pilotierte Fahren jederzeit zu unterbrechen.

Beispiele, bei denen ein pilotiertes Fahren sich bereits heute jedenfalls im Entwicklungsstadium befindet, umfassen pilotiertes Ein- und Ausparken, pilotiertes Fahren bei einem zähfließenden Verkehr (Stau, Stop and Go) und pilotiertes Kolonnenfahren. Es ist zu erwarten, dass pilotiertes Fahren in Zukunft alle Bereiche der Fortbewegung mit einem Fahrzeug umfassen wird, bspw. ein pilotiertes Fahren entlang einer vorgebbaren Strecke.

Da der Zustand eines pilotierten Fahrens für Personen und/oder Einrichtungen außerhalb des Fahrzeugs 1 nicht ohne weiteres erkennbar ist (es befindet sich ein Fahrer auf dem Fahrerplatz; das Fahrzeug 1 bewegt sich ohne erkennbare Besonderheiten im Verkehr, etc.) ist es vorteilhaft, wenn Personen und/oder Einrichtungen außerhalb des Fahrzeugs 1 mittels des erfindungsgemäßen Fahrzeugs 1 durch einen entsprechenden Leuchtstreifen am Fahrzeug 1 über diesen Zustand informiert werden.

Da erfindungsgemäß ein gleichartiger Leuchtstreifen auch von dem ersten Abschnitt 2, 2' der Beleuchtungseinrichtung erzeugt wird, wird in vorteilhafter Weise auch der Fahrer und gegebenenfalls weitere Insassen eines Fahrzeugs 1 mittels dieses Leuchtstreifens über den Zustand des pilotierten Fahrens informiert bzw. daran erinnert.

Mittels geeigneter fahrzeugseitiger Sensorik können heute bereits spezielle Verkehrssituationen und für das Fahren mit einem Fahrzeug 1 relevante Gegebenheiten erkannt werden, bspw. Glätte der Fahrbahnoberfläche, Regen, Nebel, Stau, Geschwindigkeit und Abstand von vorausfahrenden Fahrzeugen, etc. Sobald eine derartige Verkehrssituation oder eine derartige Gegebenheit erkannt wird, kann mittels der bei dem erfindungsgemäßen Fahrzeuge 1 vorgesehenen Beleuchtungsvorrichtung durch ein Steuergerät ein entsprechender Leuchtstreifen erzeugt werden, mit dem sowohl die Insassen des Fahrzeugs 1 als auch Personen und/oder Einrichtungen außerhalb des Fahrzeugs 1 über die Verkehrssituation und/oder Gegebenheit informiert werden.

In ähnlicher Weise kann die bei dem erfindungsgemäßen Fahrzeug 1 vorgesehene Beleuchtungsvorrichtung eingesetzt werden, wenn eine relevante Verkehrssituation/Gegebenheit mittels einer Car-to-Car-Kommunikation zwischen Fahrzeugen oder von einer externen Einrichtung (bspw. per analogen oder digitalen Funkwellen, bspw. UKW, DAB+, Mobilfunk, etc.) empfangen wird.

Der erste Abschnitt 2, 2' und der zweite Abschnitt 4, 4' der Beleuchtungseinrichtung sind als ein gemeinsamer, einstückiger Lichtleitkörper ausgebildet. Beispielsweise kann sich dieser einstückige Lichtleitkörper ausgehend von dem Armaturenbrett durch die durch die A-Säule gegebene Bauteiltrennung hinweg bis in die A-Säule hinein erstrecken und dort an der Außenseite der A-Säule angebracht sein. In vorteilhafter Weise wird durch den Lichtleitkörper ein Leuchtstreifen erzeugt, der bis zu der jeweiligen Bauteiltrennung leuchtet. Auf diese Weise kann eine "Verbindung" zwischen den beiden Lichtorten (innen und außen) hergestellt werden, indem die Beleuchtungseinrichtung(en) der Beleuchtungsvorrichtung in vorteilhafter Weise so ausgeführt ist/sind, dass sie bis zu einer Bauteiltrennung leuchtet/leuchten, die den Innen- und den Außenraum des Fahrzeugs 1 voneinander trennt.

Als weiteres Beispiel sei der Fall erwähnt, dass sich ein einstückiger Lichtleitkörper ausgehend von einem vorderen Bereich des Dach-"Himmels" (erster Abschnitt 2, 2' der Beleuchtungseinrichtung) bis hin zu einem Scheinwerfer oder einer Leuchte des Fahrzeugs 1 (zweiter Abschnitt 4, 4' der Beleuchtungseinrichtung) erstreckt, wobei der Lichtleitkörper durch mehrere Bauteiltrennungen hindurchreicht.

Bei einer solchen Ausgestaltung des Lichtleitkörpers kann es in Abhängigkeit von der Länge und der Beschaffenheit des Lichtleitkörpers ausreichend sein, wenn beispielsweise in dem ersten Abschnitt 2, 2' oder dem zweiten Abschnitt 4, 4' eine oder mehrere Lichteinkoppelstellen vorgesehen sind. Das an dieser/diesen Lichteinkoppelstelle(n) eingekoppelte Licht wird innerhalb des Lichtleiters weitergeleitet und es kann an allen Stellen, an denen ein Leuchtstreifen erzeugt werden soll, Licht aus dem Lichtleiter ausgekoppelt werden.

Somit ist es beispielsweise möglich, dass von einer oder mehreren Lichteinkoppelstelle(n) beim zweiten Abschnitt 4, 4' der Beleuchtungseinrichtung, Licht von der Außenseite 5 des Fahrzeugs 1 zu dem ersten Abschnitt 2, 2' der Beleuchtungseinrichtung und damit in den Innenraum des Fahrzeugs 1 geleitet wird; selbstverständlich ist auch der umgekehrte Weg möglich, d.h. dass von einer oder mehreren Lichteinkoppelstelle(n) beim ersten Abschnitt 2, 2' der Beleuchtungseinrichtung, Licht zu dem zweiten Abschnitt 4, 4' der Beleuchtungseinrichtung geleitet wird und dort in den Außenbereich des Fahrzeugs 1 abgestrahlt wird.

Sollte die Länge des Lichtleitkörpers und/oder dessen Beschaffenheit derart sein, dass durch eine oder mehrere Lichteinkoppelstellen beim ersten Abschnitt 2, 2' oder beim zweiten Abschnitt 4, 4' kein zumindest annähernd gleich heller Leuchtstreifen über die vorgebbaren Strecke bei dem ersten Abschnitt 2, 2' und dem zweiten Abschnitt 4, 4' erzeugbar ist, können selbstverständlich ein oder mehrere Lichteinkoppelstellen beim ersten Abschnitt 2, 2' und dem zweiten Abschnitt 4, 4' vorgesehen sein.

Bei einem nicht erfindungsgemäßen Fahrzeug 1 kann neben einem einstückigen Lichtleitkörper aber auch vorgesehen sein, dass der erste Abschnitt 2, 2' und der zweite Abschnitt 4, 4' der Beleuchtungseinrichtung jeweils einen längsförmigen Lichtleiter umfassen und wenigstens eine Lichteinkoppelstelle bei dem Lichtleiter des ersten Abschnitts 2, 2' und/oder bei dem Lichtleiter des zweiten Abschnitts 4, 4' der Beleuchtungseinrichtung vorgesehen sind/ist.

Hierbei sind verschiedene Konstellationen möglich. Zum einen können die längsförmigen Lichtleiter des ersten Abschnitts 2, 2' und des zweiten Abschnitts 4. 4' so zueinander angeordnet und eingerichtet sein, dass beispielsweise Licht, das aus einem Ende in Längsrichtung aus dem Lichtleiter des einen Abschnitts 2, 2', 4, 4' austritt, über eine in geeigneter Weise ausgerichtete und eingerichtete Endfläche des Lichtleiters des anderen Abschnitts 4, 4', 2, 2' (bspw. eine parallele und zumindest teilweise überdeckende Ausrichtung der beiden Endflächen zueinander, wobei die jeweiligen Endflächen der Lichtleiter senkrecht zu den Längsseiten der Lichtleiter ausgerichtet sind) in den Lichtleiter des anderen Abschnitts 4, 4', 2, 2' eingeleitet werden kann. In einem solchen Fall kann es bspw. ausreichend sein, wenn nur einer der Lichtleiter eine oder mehrere Lichteinkoppelstellen aufweist, in die Licht eingekoppelt wird.

Weisen die beiden Abschnitte 2, 2' bzw. 4, 4' der Beleuchtungseinrichtung jeweils einen eigenständigen längsförmigen Lichtleitkörper auf und sind diese längsförmigen Lichtleitkörper räumlich so angeordnet und/oder durch Bauteilgrenzen voneinander getrennt, dass ein Einleiten von Licht aus einem Lichtleitkörper in den anderen Lichtleitkörper nicht möglich ist, müssen beide Lichtleitkörper eine oder mehrere Lichteinkoppelstellen aufweisen. Hierbei ist erfindungsgemäß dann nur dafür Sorge zu tragen, dass durch die Beleuchtungsvorrichtung bei den beiden längsförmigen Lichtleitern ein gleichartiger Leuchtstreifen erzeugt wird.

Ein mehrstückiger Lichtleitkörper, d.h. ein separater Lichtleitkörper sowohl im ersten Abschnitt 2, 2' als auch im zweiten Abschnitt 4, 4' der Beleuchtungseinrichtung ist insbesondere dann von Vorteil, wenn der zweite Abschnitt 4, 4' der Beleuchtungseinrichtung ortsfest in oder an einem Bauteil des Fahrzeugs 1 angeordnet ist, wobei das Bauteil relativ zu dem ersten Abschnitt 2, 2' der Beleuchtungseinrichtung von einer ersten zu einer zweiten Position beweglich ist. Hierbei kann das Bauteil des Fahrzeugs 1 bspw. eine Fahrzeugtür 6, eine Motorhaube 7, ein Außenspiegel 8, eine Heckklappe und/oder ein Kofferraumdeckel sein.

Beispielsweise kann sich die Beleuchtungseinrichtung ausgehend von dem Armaturenbrett oder der Mittelkonsole eines Fahrzeugs 1 bis hinein in das Gehäuse eines Außenspiegels 8 erstrecken. Die Gehäuse eines Außenspiegels sind in aller Regel beweglich gelagert, um bspw. ein Einklappen der Außenspiegel zu ermöglichen.

Weitere Beispiele umfassen Fälle, in denen der zweite Abschnitt 4, 4' der Beleuchtungseinrichtung in/an einer Fahrzeugtür 6, einer Motorhaube 7, einer Heckklappe und/oder einem Kofferraumdeckel angeordnet ist.

Hierbei kann, wie oben bereits geschildert, vorgesehen sein, dass in den Lichtleiter des ersten 2, 2' und/oder zweiten 4, 4' Abschnitts eingekoppeltes Licht in den Lichtleiter des jeweils anderen Abschnitts einleitbar ist, wenn sich das Bauteil in der ersten Position befindet, sich in der ersten Position also einander gegenüberstehende Enden der jeweiligen Lichtleiter so zueinander angeordnet sind, dass ein Einleiten von Licht, das aus dem Ende eines Lichtleiters austritt, in das Ende des anderen Lichtleiters möglich ist.

Wenn in einem solchen Fall vorgesehen ist, dass nur in einen der beiden Lichtleiter Licht eingekoppelt wird, bspw. in den Lichtleiter des ersten Abschnitts 2, 2', entsteht ein Leuchtstreifen bei dem zweiten Abschnitt 4, 4' der Beleuchtungseinrichtung nur dann, wenn sich das Bauteil in der ersten Position befindet. Oder umgekehrt, wenn bspw. Licht nur in den Lichtleiter des zweiten Abschnitts 4, 4' eingekoppelt wird, entsteht ein Leuchtstreifen bei dem ersten Abschnitt 2, 2' der Beleuchtungseinrichtung nur dann, wenn sich das Bauteil in der ersten Position befindet.

Eine solche Ausgestaltung kann beispielsweise dazu dienen, einen Insassen des Fahrzeugs 1 darüber zu informieren, ob sich bspw. eine Fahrzeugtür 6, eine Motorhaube 7, eine Heckklappe und/oder ein Kofferraumdeckel in einem ordnungsgemäß geschlossenen Zustand (d.h. in einer ersten Position) befindet. Wenn bspw. Licht nur in den Lichtleiter des zweiten Abschnitts 4, 4' eingekoppelt wird, wird ein Leuchtstreifen bei dem ersten Abschnitt 2, 2' der Beleuchtungseinrichtung (der von einem Insassen des Fahrzeugs 1 wahrnehmbar ist) nur dann erzeugt, wenn sich das entsprechende Bauteil des Fahrzeugs 1 in einer vorgebbaren ersten Position befindet, d.h. in diesem Fall ordnungsgemäß geschlossen ist. Bei einem Außenspiegel 8 wird das ordnungsgemäße und vollständige Ausklappen des Außenspiegelgehäuses dadurch signalisiert, dass ein Leuchtstreifen bei dem ersten Abschnitt 2, 2' der Beleuchtungseinrichtung sichtbar ist.

Selbstverständlich ist auch der umgekehrte Fall möglich, d.h. dass Licht nur in den Lichtleiter des ersten Abschnitts 2, 2' eingekoppelt wird und ein Leuchtstreifen bei dem zweiten Abschnitt 4, 4' der Beleuchtungseinrichtung (der von einer Position relativ zu und außerhalb des Fahrzeugs 1 wahrnehmbar ist) nur dann erzeugt wird, wenn sich das entsprechende Bauteil des Fahrzeugs 1 in einer vorgebbaren ersten Position befindet. Hierdurch ist beispielsweise eine Kontrolle einer ordnungsgemäßen Position des entsprechenden Bauteils durch eine Person oder Einrichtung von außerhalb des Fahrzeugs 1 möglich.

Der von einer Position relativ zu und außerhalb des Fahrzeugs 1 wahrnehmbare Leuchtstreifen des zweiten Abschnitts 4, 4' der Beleuchtungseinrichtung des erfindungsgemäßen Fahrzeugs 1 kann selbstverständlich nicht nur von Personen außerhalb des Fahrzeugs 1 gesehen werden, sondern auch von entsprechenden Einrichtungen von anderen Fahrzeugen und/oder Einrichtungen zur Verkehrsleitung/Verkehrskontrolle, Fahrzeugkontrolle, etc. erfasst und ausgewertet werden.

Entsprechende Einrichtungen, wie bspw. Kamerasysteme mit entsprechender Bildauswertungssoftware sind dem Fachmann bekannt, so dass hierauf in der vorliegenden Anmeldung nicht näher eingegangen zu werden braucht.

Selbstverständlich kann das erfindungsgemäße Fahrzeug 1 eine Mehrzahl an Beleuchtungsvorrichtungen mit je wenigstens einer längsförmigen Beleuchtungseinrichtung entsprechend der vorliegenden Erfindung aufweisen. Hierdurch wird erreicht, dass bei dem erfindungsgemäßen Fahrzeug 1 an verschiedenen Stellen des Innenraums und Außenraums des Fahrzeugs 1 Leuchtstreifen erzeugt werden können. Die durch die verschiedenen Beleuchtungsvorrichtungen erzeugten Leuchtstreifen können selbstverständlich abwechselnd, entsprechend einer vorgebbaren zeitlichen Abfolge, etc. erzeugt werden.

Auch kann eine Beleuchtungsvorrichtung selbstverständlich mehrere Beleuchtungseinrichtungen aufweisen, so dass bspw. durch eine Beleuchtungsvorrichtung ein oder mehrere Leuchtstreifen im Innenraum eines Fahrzeugs 1 und ein oder mehrere Leuchtstreifen an der Außenseite 5 des Fahrzeugs 1 erzeugt werden können. Beispielsweise kann vorgesehen sein, dass je ein längsförmiger, gegebenenfalls animierter Leuchtstreifen bei beiden Frontscheinwerfern oder bei allen Blinkleuchten des Fahrzeugs 1 durch eine Beleuchtungsvorrichtung erzeugbar ist, aber nur ein entsprechender Leuchtstreifen im Innenraum des Fahrzeugs 1.

Die Beleuchtungseinrichtungen der Beleuchtungsvorrichtung können an allen geeigneten Stellen im Innenraum (bspw. Armaturenbrett, Instrumententräger, Mittelkonsole, Türverkleidung, Dach), oder an der Außenseite 5 des Fahrzeugs 1 angebracht sein (bspw. Vorderseite, Rückseite, Seitenbereiche, Dachbereich).

Wie in der Beschreibungseinleitung bereits erwähnt wurde, sind aus dem Stand der Technik Beleuchtungsvorrichtungen (Lichtelemente) bekannt, die im Interieur eines Fahrzeugs 1 verbaut sind, sowie solche Beleuchtungsvorrichtungen (Lichtelemente), die das äußere eines Fahrzeugs 1 illuminieren.

Durch die vorliegende Erfindung wird in neuartiger Weise eine Verbindung zwischen diesen beiden Lichtorten hergestellt. Um eine "Verbindung" zwischen den beiden Lichtorten herzustellen, sind die Beleuchtungseinrichtungen der Beleuchtungsvorrichtung in vorteilhafter Weise so ausgeführt, dass sie bis zu einer Bauteiltrennung leuchten, die den Innen- und den Außenraum des Fahrzeugs 1 voneinander trennt. Um Dunkelstellen zu vermeiden, kann vorgesehen sein, dass die Beleuchtungseinrichtungen nicht durch Lichteinkopplungsstellen voneinander getrennt sind.

Um Warnungen oder Intentionen (z.B. Blinken) anzuzeigen, kann das Licht (der Leuchtstreifen) über Animationen, die durch eine Programmierung gesteuert wird, einen stufenlosen Übergang zwischen dem Innen- und dem Außenraum abbilden.

So kann bspw. ein Fahrer zunächst auf einen Passanten aufmerksam gemacht werden (bspw. durch eine Anzeige auf einem Bildschirm, ein Head-Up-Display) und durch die Animation von dem Interieur bis in das Exterieur (Außenseite 5) des Fahrzeugs 1 auch der Passant gewarnt werden.

Auch können durch die vorliegende Erfindung Informationen aus dem Fahrzeug 1 in das Umfeld transportiert bzw. signalisiert werden. Dies kann bspw. für eine Information bzw. einen Informationsaustausch in einer Phase des pilotierten Fahrens vorteilhaft sein, um Informationen optisch zwischen Fahrzeugen bzw. zwischen Insassen von Fahrzeugen zu übergeben.

## Patentansprüche

1. Fahrzeug (1), insbesondere Kraftfahrzeug, mit wenigstens einer Beleuchtungsvorrichtung mit einer längsförmigen Beleuchtungseinrichtung zum Erzeugen eines Leuchtstreifens entlang einer vorgegebenen Strecke der Beleuchtungseinrichtung,
wobei ein erster Abschnitt (2, 2') der Beleuchtungseinrichtung am Interieur (3) des Fahrzeugs (1) und ein zweiter Abschnitt (4, 4') der Beleuchtungseinrichtung an der Außenseite (5) des Fahrzeugs (1) angeordnet ist,
die Beleuchtungsvorrichtung dazu eingerichtet ist, gleichzeitig einen gleichartigen Leuchtstreifen entlang einer Strecke des ersten (2, 2') sowie des zweiten Abschnitts (4, 4') der Beleuchtungseinrichtung zu erzeugen, und
das Licht des von dem ersten Abschnitt (2, 2') der Beleuchtungseinrichtung erzeugten Leuchtstreifens derart abgestrahlt wird, dass es für einen, sich an einer vorgebbaren Position des Innenraums des Fahrzeugs (1) befindlichen Insassen sichtbar ist, und das Licht des von dem zweiten Abschnitt (4, 4') der Beleuchtungseinrichtung erzeugten Leuchtstreifens derart abgestrahlt wird, dass er von einer vorgebbaren Position relativ zu dem und außerhalb des Fahrzeugs (1) sichtbar ist, **dadurch gekennzeichnet, dass**
der erste Abschnitt (2, 2') und der zweite Abschnitt (4, 4') der Beleuchtungseinrichtung als ein gemeinsamer, einstückiger Lichtleitkörper ausgebildet sind, in den Licht einkoppelbar ist und der sich durch wenigstens eine Bauteiltrennung, die den Innen- und den Außenraum des Fahrzeugs (1) voneinander trennt, hinweg erstreckt.

2. Fahrzeug (1) gemäß Anspruch 1,
**dadurch gekennzeichnet, dass**
der durch die Beleuchtungseinrichtung erzeugte, gleichartige Leuchtstreifen eine vorgebbare Lichtfarbe, einen vorgebbaren Wechsel der Lichtfarbe, eine vorgebbare Lichtintensität, eine vorgebbare Änderung der Lichtintensität und/oder eine vorgebbare Leuchtdauer aufweist.

3. Fahrzeug (1) gemäß Anspruch 1 oder 2,
**dadurch gekennzeichnet, dass**
die Beleuchtungsvorrichtung weiter eine Bedieneinrichtung für einen Benutzer aufweist, mittels der die Beleuchtungseinrichtung eingeschaltet oder ausgeschaltet, und/oder die Lichtfarbe, der Wechsel der Lichtfarbe, die Lichtintensität, die Änderung der Lichtintensität und/oder die Leuchtdauer eingestellt werden kann.

4. Fahrzeug (1) gemäß einem der vorhergehenden Ansprüche,
**dadurch gekennzeichnet, dass**
die Beleuchtungsvorrichtung weiter ein Steuergerät aufweist, mittels dem in Abhängigkeit von vorgebbaren Gegebenheiten die Beleuchtungseinrichtung eingeschaltet oder ausgeschaltet, und/oder die Lichtfarbe, der Wechsel der Lichtfarbe, die Lichtintensität, die Änderung der Lichtintensität und/oder die Leuchtdauer gesteuert werden kann.

5. Fahrzeug (1) gemäß Anspruch 4,
**dadurch gekennzeichnet, dass**
das Steuergerät dazu eingerichtet ist, die Beleuchtungsvorrichtung in Abhängigkeit von einer erkannten Fehlfunktion des Fahrzeugs (1), eines erkannten fahruntüchtigen oder eingeschränkt fahrtüchtigen Zustands des Fahrers, eines Zustands pilotierten Fahrens und/oder einer vorgebbaren erkannten Verkehrssituation zu steuern.

6. Fahrzeug (1) gemäß einem der vorhergehenden Ansprüche,
**dadurch gekennzeichnet, dass**
als Leuchtmittel, mit dem Licht in den wenigstens einen längsförmigen Lichtleiter der Beleuchtungseinrichtung eingekoppelt werden kann, ein oder mehrere Lichtemittierende Dioden vorgesehen sind.

7. Fahrzeug (1) gemäß einem der vorhergehenden Ansprüche,
**dadurch gekennzeichnet, dass**
ein Bauteil des Fahrzeugs (1), an dem der zweite Abschnitt (4, 4') der Beleuchtungseinrichtung angeordnet ist, eine Fahrzeugtür (6), eine Motorhaube (7), ein Außenspiegel (8), eine Heckklappe und/oder ein Kofferraumdeckel ist.

## Claims

1. Vehicle (1), in particular motor vehicle, having at least one lighting device with an elongate lighting unit for generating a light strip along a predetermined path of the lighting unit, wherein a first section (2, 2') of the lighting unit on the interior (3) of the vehicle (1) and a second section (4, 4') of the lighting unit is arranged on the outer side (5) of the vehicle (1),
the lighting device being set up to simultaneously generate a similar light strip along a path of the first (2, 2') and of the second section (4, 4') of the lighting unit, and
the light from the first section (2, 2') of the lighting unit is radiated in such a way that it is visible to an occupant at a predeterminable position of the interior of the vehicle (1), and the light from the second section (4, 4') of the lighting unit is radiated such that it is visible from a predeterminable position relative to and outside the vehicle (1),
**characterised in that**
the first section (2, 2') and the second section (4, 4') of the lighting unit are formed as a common, single-level light-guide body, in which light can be coupled and extends beyond at least one component partition that separates the inner and the outer space of the vehicle (1) from each other.

2. Vehicle (1) according to claim 1,
**characterised in that**
the similar light strips generated by the lighting unit has a predeterminable light colour, a predeterminable change of light colour, a predetermined light intensity, a predetermined change in the light intensity and/or a predetermined duration of light.

3. Vehicle (1) according to claim 1 or 2,
**characterised in that**
the lighting device further comprises an operating unit for a user, by means of which the lighting unit can be switched on or off, and/or the light colour, the change of light colour, the light intensity, the change of light intensity and/or the lighting duration can be set.

4. Vehicle (1) according to any one of the preceding claims,
**characterised in that**
the lighting device further comprises a control unit, by means of which the lighting unit is switched on or off depending on predeterminable conditions, and/or the light colour, the change of the light colour, the light intensity, the change of the light intensity and/or the lighting duration can be controlled.

5. Vehicle (1) according to claim 4,
**characterised in that**
the control unit is adapted to the lighting device in response to a detected malfunction of the vehicle (1), a recognized non-roadworthy or restricted roadworthy state of the driver, a state of piloted driving and/or predictably detected traffic situation.

6. Vehicle (1) according to any one of the preceding claims,
**characterised in that**
one or more light-emitting diodes are provided as lighting means, with which light can be coupled into at least one elongate light guide of the lighting unit.

7. Vehicle (1) according to any one of the preceding claims,
**characterised in that**
a component of the vehicle (1), on which the second section (4, 4') of the lighting unit is arranged, is a vehicle door (6), a bonnet (7), an external mirror (8), a tailgate and/or a trunk lid.

## Revendications

1. Véhicule (1), en particulier véhicule automobile, avec au moins un système d'éclairage avec un dispositif d'éclairage de forme longue destiné à produire une bande lumineuse le long d'une section prédéterminée du dispositif d'éclairage,
dans lequel est agencé un premier tronçon (2, 2') du dispositif d'éclairage au niveau de l'intérieur (3) du véhicule (1) et un deuxième tronçon (4, 4') au niveau du côté extérieur (5) du véhicule (1),
dans lequel le système d'éclairage est conçu pour produire simultanément une bande lumineuse du même type le long d'une section du premier tronçon (2, 2') ainsi que le long d'une section du deuxième tronçon (4, 4') du dispositif d'éclairage et
dans lequel la lumière de la bande lumineuse produite par le premier tronçon (2, 2') du dispositif d'éclairage est diffusée de telle sorte qu'elle est visible pour un occupant se trouvant au niveau d'une position pouvant être prescrite dans l'espace intérieur du véhicule (1) et la lumière de la bande lumineuse produite par le deuxième tronçon (4, 4') du dispositif d'éclairage est diffusée de telle sorte qu'elle est visible d'une position pouvant être prescrite par rapport au véhicule et à l'extérieur du véhicule (1),
**caractérisé en ce que** le premier tronçon (2, 2') et le deuxième tronçon (4, 4') du dispositif d'éclairage sont conçus comme un corps guide de lumière commun, d'un seul tenant, dans lequel de la lumière peut être introduite et qui s'étend au-delà d'au moins une séparation d'élément de construction qui sépare l'un de l'autre l'espace intérieur et l'espace extérieur du véhicule (1).

2. Véhicule (1) selon la revendication 1, **caractérisé en ce que** la bande lumineuse du même type, produite par le dispositif d'éclairage, présente une couleur de lumière pouvant être prescrite, un changement pouvant être prescrit de la couleur de lumière, une intensité lumineuse pouvant être prescrite, une variation pouvant être prescrite de l'intensité lumineuse et/ou une durée d'éclairage pouvant être prescrite.

3. Véhicule (1) selon la revendication 1 ou 2, **caractérisé en ce que** le système d'éclairage comporte en outre un dispositif de commande qui est destiné à un utilisateur et au moyen duquel le dispositif d'éclairage peut être allumé ou éteint et/ou la couleur de lumière, le changement de la couleur de lumière, l'intensité lumineuse, la variation de l'intensité lumineuse et/ou la durée d'éclairage peuvent être réglés.

4. Véhicule (1) selon l'une quelconque des revendications précédentes, **caractérisé en ce que** le système d'éclairage comporte en outre un appareil de commande au moyen duquel, en fonction de caractéristiques pouvant être prescrites, le dispositif d'éclairage peut être allumé ou éteint et/ou la couleur de lumière, le changement de la couleur de lumière, l'intensité lumineuse, la variation de l'intensité lumineuse et/ou la durée d'éclairage peuvent être réglés.

5. Véhicule (1) selon la revendication 4, **caractérisé en ce que** l'appareil de commande est conçu pour commander le système d'éclairage en fonction d'un dysfonctionnement détecté du véhicule (1), en fonction d'un état détecté du conducteur, incapacité à conduire ou capacité à conduire restreinte, en fonction d'un état de conduite pilotée et/ou en fonction d'une situation de circulation pouvant être prescrite et détectée.

6. Véhicule (1) selon l'une quelconque des revendications précédentes, **caractérisé en ce que**, comme moyen d'éclairage avec lequel de la lumière peut être introduite dans l'au moins un guide de lumière de forme longue du dispositif d'éclairage, il est prévu une ou plusieurs diodes électroluminescentes.

7. Véhicule (1) selon l'une quelconque des revendications précédentes, **caractérisé en ce qu'**un élément de construction du véhicule (1), au niveau duquel le deuxième tronçon (4, 4') du dispositif d'éclairage est agencé, est une portière de véhicule (6), un capot de moteur (7), un rétroviseur extérieur (8), un hayon et/ou un capot de coffre.
